# EUROPEAN PATENT SPECIFICATION

(11) **EP 3 121 454 B1**
(45) Date of publication and mention of the grant of the patent: **12.12.2018**
(21) Application number: 16180354.9
(22) Date of filing: 20.07.2016
(51) Int. Cl.: F15B 11/08, F15B 19/00

(54) **HYDRAULIC SIGNAL CONTROL SYSTEM AND METHOD**
SYSTEM UND VERFAHREN ZUR STEUERUNG EINES HYDRAULISCHEN SIGNALS
SYSTÈME ET PROCÉDÉ DE COMMANDE DE SIGNAL HYDRAULIQUE

(30) Priority: 22.07.2015 US 201514806406
(43) Date of publication of application: 25.01.2017
(73) Proprietor: CNH Industrial Italia S.p.A., 10135 Torino (IT)
(72) Inventor: JOHNSON, Thomas, Chicago 60614 (US)
(74) Representative: CNH Industrial IP Department

(56) References cited:
- EP-A1- 0 331 076
- EP-A2- 0 756 089
- US-A- 4 967 554
- US-B1- 6 196 247

## Description

### BACKGROUND

The present disclosure relates generally to hydraulic systems and, more specifically, to controlling a hydraulic signal to synchronize actuation of valves in a hydraulic system.

Hydraulic systems may be used in various applications, such as within agricultural vehicles and implements. Typically, control valves are used in hydraulic systems to supply and/or drain hydraulic fluid from a work port and/or from hydraulic fluid reservoirs (e.g., tanks). For example, one or more hydraulic cylinders may be coupled to a work port and driven by the application and/or withdrawal of the hydraulic fluid through the valves. The valves generally used in hydraulic systems may include directional control valves, low-leak valves, and/or pilot stage check valves, among others. If there is leakage amongst the valves used in the hydraulic system, cavitation may occur. One way that leakage may occur is if the opening and/or closure timings of the valves in certain hydraulic systems are not synchronized. Cavitation may occur by gas bubbles forming in areas of the hydraulic system where pressure is low. For example, if the timing of the valves is not properly synchronized, one valve may open early and enable drainage of hydraulic fluid while another valve on the opposing side of the hydraulic system does not open. The difference in fluid pressure between the two sides may cause cavitation, which may lead to undesirable maintenance conditions and/or reduce the longevity of certain components within the hydraulic system. US6,196,247 discloses a valve assembly for actuation of a user and a method for actuation of the valve assembly, wherein a supply throttle device and a drain throttle device may be actuated independent of each other, is disclosed. In the case of single-action users, the drain throttle device is actuated such that the open cross-section of the drain throttle is maximum upon attaining the desired volumetric flow of hydraulic oil, so that the energy losses in the drain conduit are reduced to minimum.

### BRIEF DESCRIPTION

In an embodiment, a tangible, non-transitory computer-readable media stores computer instruction. The computer instructions, when executed by a processor, are configured to increase a first signal pressure to a first actuating element of a directional control valve until the directional control valve is about to shift positions. The first signal pressure is greater than a second signal pressure to a second actuating element of the directional control valve by a signal pressure differential. The computer instructions are also configured to increase the first signal pressure and the second signal pressure equally while maintaining the signal pressure differential to cause a first pilot stage valve via the first signal pressure and a second pilot stage valve via the second signal pressure to shift positions, and, within a threshold time thereafter, increase the first signal pressure while maintaining the second signal pressure to increase the signal pressure differential to a value sufficient to cause the directional control valve to shift positions.

In an embodiment, a hydraulic system includes a directional control valve fluidly coupled to a pump, a hydraulic fluid reservoir, and a first and second vent-to-open check valve. The first vent-to-open check valve is fluidly coupled to the directional control valve, the hydraulic fluid reservoir, and a first work port. The second vent-to-open check valve is fluidly coupled to the directional control valve, the hydraulic fluid reservoir, and a second work port. The hydraulic system also includes a controller including a processor and a memory. The processor is configured to execute computer instructions stored on the memory. The computer instructions are configured to increase a first signal pressure to a first actuating element of the directional control valve until the directional control valve is about to shift positions. The first signal pressure is greater than a second signal pressure to a second actuating element of the directional control valve by a signal pressure differential. The computer instructions are also configured to increase the first signal pressure and the second signal pressure equally while maintaining the signal pressure differential to cause the first vent-to-open check valve via the first signal pressure and the second vent-to-open check valve via the second signal pressure to shift positions. Within a threshold time thereafter, the computer instructions are configured to increase the first signal pressure while maintaining the same second signal pressure to increase the signal pressure differential to a value sufficient to cause the directional control valve to shift positions.

In an embodiment, a hydraulic system includes a directional control valve fluidly coupled to a pump, a hydraulic fluid reservoir, and a first and second vent-to-open check valve. The first vent-to-open check valve is fluidly coupled to the directional control valve, the hydraulic fluid reservoir, and a first work port. The second vent-to-open check valve is fluidly coupled to the directional control valve, the hydraulic fluid reservoir, and a second work port. The hydraulic system also includes a controller comprising a processor and a memory. The processor is configured to execute computer instructions stored on the memory. The computer instructions are configured to increase a first signal pressure to a first actuating element of the directional control valve until the directional control valve is about to shift positions. The first signal pressure is greater than a second signal pressure to a second actuating element of the directional control valve by a signal pressure differential. The computer instructions are also configured to increase the first signal pressure and the second signal pressure equally while maintaining the signal pressure differential to cause the first vent-to-open check valve via the first signal pressure and the second vent-to-open check valve via the second signal pressure to shift positions. Within a threshold time thereafter, the computer instructions are configured to increase the first signal pressure while maintaining the same second signal pressure to increase the signal pressure differential to a value sufficient to cause the directional control valve to shift positions.

### DRAWINGS

These and other features, aspects, and advantages of the present disclosure will become better understood when the following detailed description is read with reference to the accompanying drawings in which like characters represent like parts throughout the drawings, wherein:
FIG. 1 is a perspective view of an embodiment of an agricultural vehicle that may employ a hydraulic system;
FIG. 2 is a perspective view of an embodiment of an agricultural implement that may include hydraulic components fluidly coupled to a hydraulic system of the agricultural vehicle of FIG. 1;
FIG. 3 is a schematic diagram of an embodiment of a hydraulic system that may be used in the agricultural vehicle of FIG. 1, and that uses automatic signal pressure to synchronize actuation of a directional control valve and pilot-to-open check valves;
FIG. 4 is a flow diagram of an embodiment of a process suitable for controlling automatic signal pressure to synchronize actuation of valves within the hydraulic system of FIG. 3;
FIG. 5 is a schematic diagram of another embodiment of a hydraulic system that may be used in the agricultural vehicle of FIG. 1, and that uses automatic signal pressure to synchronize actuation of a directional control valve and pilot-to-open check valves;
FIG. 6 is a schematic diagram of a further embodiment of a hydraulic system that may be used in the agricultural vehicle of FIG. 1, and that uses flow control valves with position feedback to synchronize actuation of the directional control valve and pilot stage check valves;
FIG. 7 is a flow diagram of an embodiment of a process suitable for controlling the flow control valves of FIG. 6 to synchronize actuation of the valves of the hydraulic system;
FIG. 8 is a schematic diagram of an embodiment of a hydraulic system that may be used in the agricultural vehicle of FIG. 1, and that uses pressure control valves to synchronize actuation of the directional control valve and the pilot stage check valves;
FIG. 9 is a flow diagram of an embodiment of a process suitable for controlling the pressure control valves of FIG. 8 to synchronize actuation of the valves of the hydraulic system;
FIG. 10 is a schematic diagram of another embodiment of a hydraulic system that may be used in the agricultural vehicle of FIG. 1, and that uses automatic signal pressure to synchronize actuation of a directional control valve and pilot-to-open check valves; and
FIG. 11 is a flow diagram of an embodiment of a process suitable for controlling the valves of FIG. 10 to synchronize actuation of the valves of the hydraulic system.

### DETAILED DESCRIPTION

One or more specific embodiments of the present disclosure will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present disclosure, the articles "a," "an," "the," and "said" are intended to mean that there are one or more of the elements. The terms "comprising," "including," and "having" are intended to be inclusive and mean that there may be additional elements other than the listed elements. Any examples of operating parameters and/or environmental conditions are not exclusive of other parameters/conditions of the disclosed embodiments. It should be noted that the term "directional control valve" and "directional valve" may be used interchangeably herein. It should also be noted that a pressure source for a hydraulic system may be referred to as a "pump" herein.

Leakage from the work ports in a hydraulic system may reduce the efficiency of hydraulic components fluidly coupled to the work ports. As a result, a check valve may be employed to reduce work port leakage from a hydraulic system controlled by a directional control valve. In bidirectional systems, the check valve may be opened to enable reverse flow (e.g., to enable a single acting cylinder to retract or to control a double acting cylinder). As mentioned above, one type of check valve that may be used is a "vent-to-open" check valve. The vent-to-open check valve may vent one chamber of a hydraulic component to a low pressure return line.

One undesirable effect of this technique is the introduction of a second path for leakage. That is, hydraulic fluid may leak from the directional control valve into the low pressure return line while the directional control valve and the vent-to-open check valve are closed. To remedy the leakage, a second check valve, referred to as a "pilot stage check valve" or "pilot stage valve" is used. The pilot stage check valve blocks flow through the low pressure return line while closed. In addition, the pilot stage check valve is controlled by a signal pressure. When the signal pressure reaches an established threshold, the pilot stage check valve opens, which enables the vent-to-open check valve to open, thereby enabling reverse flow.

Oftentimes, the signal pressure may be provided from the same source that is used to control the directional control valve. Because the pressure sufficient to drive movement of each valve may be different, the directional control valve and the pilot stage check valve may not open at the same time. When the pilot stage check valve is opened before the directional control valve, a work port may drain hydraulic fluid through the low pressure return line without balancing the hydraulic fluid flow through the opposing line, which may lead to cavitation as described above. Additionally, if the pilot stage check valve is opened after the directional control valve, the directional control valve may not provide sufficient control over low flows of hydraulic fluid. Thus, it is desirable to open the pilot stage check valve and the directional control valve at the desired time (e.g., substantially the same time) so that the possibility of cavitation is substantially reduced or eliminated and flow of the hydraulic fluid may be controlled.

Accordingly, presently disclosed embodiments relate to a system and method for controlling the signal pressure in a hydraulic system such that the valves are substantially synchronously opened. In some embodiments, a calibration is performed to determine the exact pressure sufficient to cause the directional control valve to move. This calibration may be performed for each valve, and may be used to account for any variation in parts, such as parts made by different manufacturers, parts that are newer or older, and the like. One such calibration method is set forth in U.S. Patent No. 6,571,190, entitled "Automatic Calibration of Remote Hydraulic Valve Flow," filed on April 30, 2001 by Hou et al., which is hereby incorporated into the present disclosure by reference.

In one embodiment, the hydraulic system may control the signal pressures by increasing a first signal pressure until the directional control valve shifts to a position just barely short of opening. Next, while keeping a pressure differential the same between the first signal pressure and a second signal pressure, both signal pressures are increased. The higher signal pressures cause the pilot stage check valves to open. Then, while maintaining, or increasing by a lesser amount, the lower second signal pressure, the higher first signal pressure may be increased to obtain a higher pressure differential to shift the directional control valve to an open position. Because increasing the higher first signal pressure to obtain a higher pressure differential is performed immediately after increasing both signal pressures while maintaining the pressure differential, the directional control valve and pilot stage check valves are opened at substantially the same time. As described below, additional embodiments may not use the pilot stage check valves to control the flow of hydraulic fluid. Additionally, as described below, some embodiments use electrical signals to control pressure control valves and/or flow control valves that use position feedback.

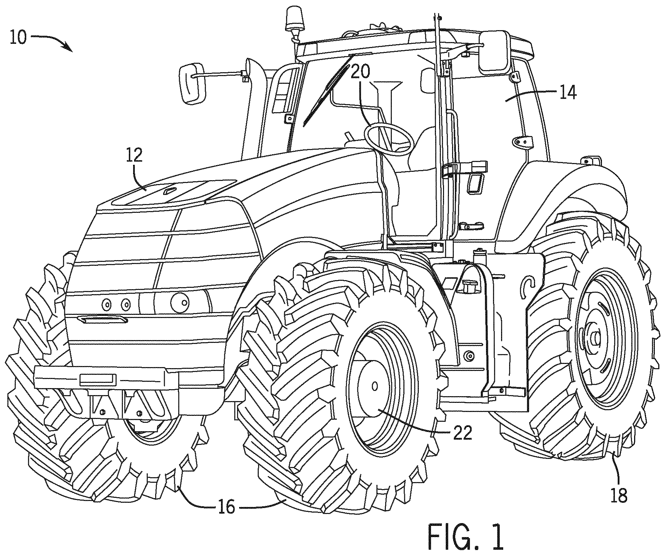

FIG. 1 is a perspective view of an embodiment of an agricultural vehicle 10 that may employ a hydraulic system. In certain embodiments, the agricultural vehicle 10 may be any type of tractor, off-road vehicle, work vehicle, or any other suitable vehicle that utilizes a hydraulic system. The illustrated vehicle 10 has a body 12 that typically houses an engine, transmission, and power train (not separately shown). Further, the agricultural vehicle 10 has a cabin 14 where an operator may sit or stand to operate the vehicle 10. The vehicle 10 has two front wheels 16 and two rear wheels 18 that rotate to move the vehicle 10. As may be appreciated, the vehicle 10 is maneuvered using a steering wheel 20 that causes the wheels 16 to turn. The wheels 16 are coupled together by an axle 22 so that both wheels 16 may be rotated together. The agricultural vehicle 10 may include a vehicle steering system.

The hydraulic system included in the vehicle 10 may be controlled by manual inputs (e.g., by an operator using a lever) and/or by electrical control (e.g., by a controller activating solenoids coupled to control valves). Also, the hydraulic system may include a pump that distributes hydraulic fluid through fluid conduits (e.g., lines, chambers, etc.) to various work ports, one or more valves that control the flow of the hydraulic fluid and/or drainage of the hydraulic fluid, and hydraulic fluid reservoirs (e.g., tanks) where the hydraulic fluid is retained. In some embodiments, the hydraulic system includes a controller that is used to activate solenoids attached to certain valves that control the flow to the work ports and/or signal pressures.

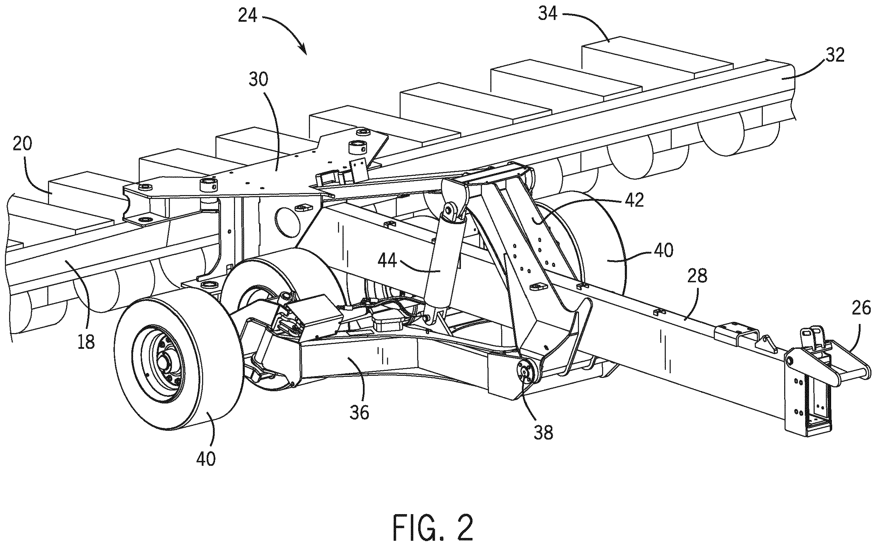

FIG. 2 is a perspective view of an embodiment of an agricultural implement 24 that may include hydraulic components fluidly coupled to a hydraulic system of the agricultural vehicle of FIG. 1. The hydraulic system may be used to facilitate steering of wheel assemblies, raising and lowering of a hitch assembly 28, and so forth. As described in detail below, the signal pressures may be controlled to synchronize the actuation of valves in the hydraulic system to control the flow of hydraulic fluid, while substantially reducing or eliminating leakage. The implement 24 is designed to be towed behind a prime mover such as the agricultural vehicle 10. The implement 24 includes a tow hitch 26, which is coupled to the hitch assembly 28. The tow hitch 26 may be used to attach the implement 24 to the agricultural vehicle 10 and may be pivotally coupled to the hitch assembly 28 to facilitate flexibility as the implement 24 changes elevation as it is towed across a field. A toolbar mounting structure 30 is coupled to the hitch assembly 28, and configured to pivotally secure toolbars 32. In the illustrated working position, the toolbars 32 extend laterally outward from the mounting structure 30. Multiple row units 34, configured to deposit seeds and/or fertilizer into soil, are coupled to the toolbars 32.

As illustrated, a carrier frame 36 is rotatably coupled to the hitch assembly 28 by a pivot joint 38. Ground engaging wheels 40 are coupled to the carrier frame 36 to support the weight of the implement 24 during both operation and transport. In addition, a support frame 42 is coupled to the hitch assembly 28, and configured to support the carrier frame 36. Specifically, main lift cylinders 44 extend between the support frame 42 and the carrier frame 36. In the illustrated working position, the hydraulic system caused the main lift cylinders 44 to be in a retracted position such that the hitch assembly 28 is lowered relative to the carrier frame 36, thereby inducing the row units 34 to engage the soil. Additionally, the hydraulic system may cause the main lift cylinders 44 to extend to raise the row units 20 above the ground, thereby transitioning the implement into a transport position.

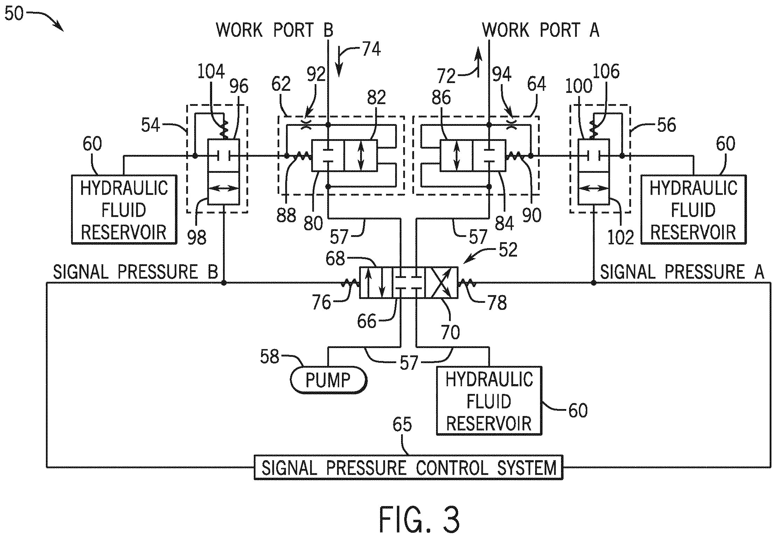

FIG. 3 is a schematic diagram of an embodiment of a hydraulic system 50 that may be used in the agricultural vehicle of FIG. 1, and that uses automatic signal pressure to synchronize actuation of a directional control valve and pilot-to-open check valves (e.g., pilot stage check valves) 54 and 56. As illustrated, the present configuration includes various valves fluidly coupled to one another via fluid conduits 57, a pump 58, and a hydraulic fluid reservoir 60. The valves may include the directional control valve 52, a first pilot stage check valve 54, a second pilot stage check valve 56, a first vent-to-open check valve 62, and a second vent-to-open check valve 64. Depending on the configuration of the valves, hydraulic fluid may be pumped or drained from connected work ports ("work port A" and "work port B"). In this way, one or more cylinders fluidly coupled to the work ports may be driven to extend or retract as desired. For example, the hydraulic fluid may be pumped through the fluid conduit 57 connecting the directional control valve 52 and the second vent-to-open check valve 64 to work port A (arrow 72) to drive a cylinder to extend and perform a desired operation, while, at the same time, hydraulic fluid may be drained (arrow 74) from work port B through the fluid conduit 57 connecting the first vent-to-open check valve 62 and the directional control valve 52 to the hydraulic fluid reservoir 60. As previously mentioned, the present hydraulic system 50 may be used to substantially reduce or eliminate hydraulic fluid leakage and/or to enable better flow control of the hydraulic fluid using the systems and methods described herein. For example, the signal pressures ("signal pressure A" and "signal pressure B") may be controlled to synchronize the opening of the directional control valve 52, the first pilot stage check valve 54, and the second pilot stage check valve 56. In the depicted embodiment, the signal pressures A and B are automatically controlled by a signal pressure control system 65. In some embodiments, the signal pressure control system 65 includes a controller that further includes a processor and a memory. The memory stores computer instructions configured to control the signal pressures of the hydraulic system and the processor is configured to execute the computer instructions.

In the illustrated embodiment, the directional control valve 52 is fluidly coupled to the pump 58 and to the hydraulic fluid reservoir 60 via fluid conduits 57 on one side, and the directional control valve 52 is fluidly coupled to the vent-to-open check valves 62 and 64 via fluid conduits 57 on the other side. In the illustrated embodiment, the directional control valve 52 is a three position/four way valve. The first position 66 is configured to block hydraulic fluid flow between the vent-to-open valves62, 64, and the pump 58 and the hydraulic fluid reservoir 60. The second position 68 is configured to facilitate hydraulic fluid flow to work port B through the first vent-to-open check valve 62, and to facilitate hydraulic fluid flow to the hydraulic fluid reservoir 60 through the first pilot stage check valve 54. The second position is also configured to facilitate draining of hydraulic fluid from work port A through the second vent-to-open check valve 64 to the hydraulic fluid reservoir 60. The third position 70 is configured to facilitate hydraulic fluid flow to work port A through the second vent-to-open check valve 64 and to facilitate hydraulic fluid flow to the hydraulic fluid reservoir 60 through the second pilot stage check valve 56. The third position 70 is also configured to facilitate draining of hydraulic fluid from work port B through the first vent-to-open check valve 62 to the hydraulic fluid reservoir 60. The second and third positions of the directional control valve 52 may be referred to as "open" positions throughout the disclosure.

The directional control valve 52 also includes two actuating elements 76 and 78 configured to adjust the position of the valve 52. In the present embodiment, the first actuating element 76 is driven by signal pressure B, and the second actuating element 78 is driven by signal pressure A. Also, the first actuating element 76 includes a spring configured to urge the directional control valve 52 toward the second position 68, and the second actuating element 78 includes a spring configured to urge the valve 52 toward the third position 70.

The first and second vent-to-open check valves 62 and 64 include two positions. The first vent-to-open check valve 62 includes a first position 80 configured to block flow of hydraulic fluid between the work port B and the directional control valve 52. The valve 62 also includes a second position 82 configured to enable the flow of hydraulic fluid between work port B and the directional control valve 52. The second vent-to-open check valve 64 includes a first position 84 configured to block the flow of hydraulic fluid between work port A and the directional control valve 52. The valve 64 also includes a second position 86 configured to enable the flow of hydraulic fluid between work port A and the directional control valve 52. It should be noted that the first and second vent-to-open check valves 62 and 64 may be any suitable type of vent-to-open check valves. For example, in some embodiments, a poppet or ball type check valve may be used.

In addition, each vent-to-open check valve 62 and 64 includes an actuating element. For example, the first vent-to-open check valve 62 includes an actuating element 88, which includes a spring configured to urge the valve 62 toward the first position 80. The second vent-to-open check valve 64 includes an actuating element 90, which includes a spring configured to urge the valve 64 toward the first position 84. The actuating elements 88 and 90 actuate the valves 62 and 64 when the force applied by the actuating elements 88 and 90 is greater than the force exerted on the other side of the valve by the hydraulic fluid. Further, each vent-to-open valve 62 and 64 includes a choke 92 and 94. The chokes 92 and 94 are configured to reduce the flow of hydraulic fluid to the actuating elements 88 and 90 so the first and second vent-to-open check valves 62 and 64 are not moved to the respective first positions 80 and 84 while providing hydraulic fluid to, and draining hydraulic fluid from, the work ports.

In the depicted embodiment, the first pilot stage check valve 54 and the second pilot stage check valve 56 include two positions. For example, the first pilot stage check valve 54 includes a first position 96 configured to block flow of hydraulic fluid between from a vent of the first vent-to-open check valve 62 to the hydraulic fluid reservoir 60. In some embodiments, the first position 96 is configured to block flow of hydraulic fluid from work port B to the hydraulic reservoir. The first pilot stage check valve 54 also includes a second position 98 configured to enable flow of hydraulic fluid from the vent of the first vent-to-open check valve 62 to the hydraulic fluid reservoir 60. In some embodiments, the second position 98 is configured is enable flow of hydraulic fluid from the work port B to the hydraulic fluid reservoir. Likewise, the second pilot stage check valve 56 includes a first position 100 configured to block flow of hydraulic fluid from a vent of the second vent-to-open check valve 64 to the hydraulic fluid reservoir 60. In some embodiments, the first position 100 is configured to block flow of hydraulic fluid from work port A to the hydraulic reservoir. The valve 56 also includes a second position 102 configured to enable flow of hydraulic fluid from the vent of the second vent-to-open check valve 64 to the hydraulic fluid reservoir 60. In some embodiments, the second position 102 is configured is enable flow of hydraulic fluid from the work port A to the hydraulic fluid reservoir.

In addition, each pilot stage check valve 54 and 56 includes an actuating element. For example, the first pilot stage check valve 54 includes an actuating element 104, which includes a spring configured to urge the valve 54 toward the first position 96. The second pilot stage check valve 56 includes an actuating element 106 which includes a spring configured to urge the valve 56 toward the first position 100. In some embodiments, the pilot stage check valves may include independent vent or return lines.

As depicted, the first pilot stage check valve 54 is driven by signal pressure B. Thus, signal pressure B controls the movement of the first pilot stage check valve 54 and the directional control valve 52. Likewise, the second pilot stage check valve 56 is driven by signal pressure A. Thus, signal pressure A controls the movement of the second pilot stage check valve 56 and the directional control valve 52. In some embodiments, to move the directional control valve 52, the pressure differential between signal pressure A and signal pressure B reaches a threshold amount. It should be noted that, in some embodiments, the hydraulic system 50 may be configured so that the signal pressure that causes the pilot stage check valves 54 and 56 to open is higher than the signal pressure sufficient to drive the directional control valve 52 to the second or third position. This configuration may be used in the systems and methods disclosed herein to properly synchronize the opening of the valves, as discussed below.

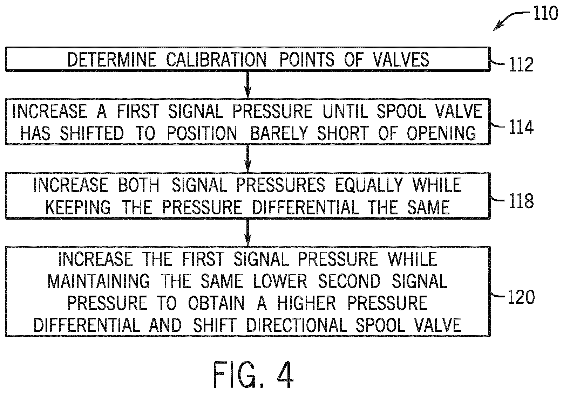

FIG. 4 is a flow diagram of an embodiment of a process 110 suitable for controlling automatic signal pressure to synchronize actuation of valves within the hydraulic system 50 of FIG. 3. The process 110 is used to control the pilot stage check valves 54 and 56 independently of the directional control valve 52 via signal pressures so that the pilot stage check valves are opened at substantially the same time as the directional control valve 52. The process 110 includes determining calibration points for each of the valves (process block 112). As noted above, calibration may be performed by a process corresponding to or similar to the techniques disclosed in the incorporated U.S. Patent No. 6,571,190. It should be noted that, in some embodiments, the calibration points may include a pressure or a position of the valve obtained from a position feedback device.

For example, a signal pressure may be applied to the directional control valve 52, and movement of the valve 52 may be monitored. If the valve 52 does not move, incrementally higher signal pressures may be applied until the valve 52 transitions to a new position (e.g., to the second position or to the third position). The difference between the signal pressure on one side of the directional control valve 52 and the pressure on the other side creates a force on the valve 52. The force acts upon the valve 52 to drive the valve 52 away from the first position 66. To shift the differential control valve 52 to a certain position (e.g., first position 66, second position 68, or third position 70), a certain signal pressure differential is applied. Once the valve 52 shifts, the signal pressure differential and/or each signal pressure A and B may be determined and recorded as a calibration pressure for valve 52. Likewise, calibration is performed for the first pilot stage check valve 54 and the first vent-to-open check valve 62 to determine the respective calibration pressures (e.g., the pressure of signal pressure B sufficient to drive the valve to move). Also, calibration is performed for the second pilot stage check valve 56 and the second vent-to-open check valve 64 to determine the respective calibration pressures (e.g., the pressure of signal pressure A that causes the valve to move). It should be noted that, in some embodiments, the calibration pressures may be affected by work port pressure. For example, if the work port pressure is high, then a higher signal pressure may be applied to move the valves, which may influence the calibration pressures. Thus, in some embodiments, it may be desirable to minimize the influence of work port pressure by draining the work ports prior to calibration. In another example, the positions of the valves may be read by the position feedback device and the directional control valve may be moved to a position barely short of opening.

The process 110 includes the signal pressure control system 65 increasing a first signal pressure until the directional control valve 52 shifts to a position barely short of opening (process block 114). In some embodiments, the calibration pressure for the valve 52 may be used in process block 114. Then, the signal pressure control system 65 increases first and second signal pressures equally while keeping the signal pressure differential the same (process block 118). As long as the signal pressure differential is the same, the directional control valve 52 does not move. The higher signal pressures will cause the pilot stage check valves 54 and 56 to open. While maintaining, or increasing by a lesser amount, the lower second signal pressure, the signal pressure control system 65 increases the first signal pressure to obtain a higher signal pressure differential sufficient to shift positions of the directional control valve 52 (process block 120). It should be understood that process block 120 is performed substantially simultaneously with process block 118. It should be noted that performing the steps in process block 120 and 118 substantially simultaneously refers to performing the steps within 10 milliseconds (ms) to 100 ms.

For example, when it is desired to provide hydraulic fluid to work port A and drain hydraulic fluid from work port B, signal pressure A is increased so the actuating element 78 drives the directional control valve 52 to a position just barely short of the third position 70 (process block 114). That is, the valve 52 is driven nearly to an open position but remains closed. For example, the calibration pressure differential for the directional control valve 52 may be 3 bar. Thus, signal pressure A may be increased to 3 bar while signal pressure B is 0 bar.

Then, both signal pressures A and B are equally increased to cause the pilot stage check valves 54 and 56 to open, while still maintaining the same signal pressure differential so the directional control valve 52 does not move (e.g., signal pressure A increases to 7 bar and signal pressure B increases to 4 bar, thereby maintaining the signal pressure differential at 3 bar, but providing the 4 bar signal pressure sufficient to shift the pilot stage check valves 54 and 56) (process block 118). It should be noted that opening the pilot stage check valves 54 and 56 (transitioning to the second positions 98 and 102) causes the vent-to-open check valves 62 and 64 to open (transition to positions 82 and 86). Then, process block 120 is executed substantially simultaneously with process block 118 by increasing signal pressure A (e.g., to 15 bar) while maintaining the lower signal pressure B (e.g., 4 bar) to obtain a pressure differential of 11 bar that shifts the directional control valve 52 to the third position 70. In this way, the pilot stage check valves 54 and 56 and the directional control valve 52 are opened at substantially the same time (e.g., within 10-100 ms). As a result, hydraulic fluid flows through the directional control valve 52, which is in the third position 70, and through the second vent-to-open check valve 64, which is in the second position 86, to work port A (arrow 72). Also, hydraulic fluid flows through the directional control valve 52, which is in the third position 70, through the second vent-to-open check valve 64, which is in the second position 86, and through the second pilot stage check valve 56, which is in the second position 102, to the hydraulic fluid reservoir 60. Additionally, hydraulic fluid is drained from work port B (arrow 74) through the first vent-to-open check valve 62, which is in the second position 82, and through the directional control valve 52, which is in the third position 70, to the hydraulic fluid reservoir 60. Also, hydraulic fluid is drained through the first pilot stage check valve 54, which is in the second position 98, to the hydraulic fluid reservoir 60.

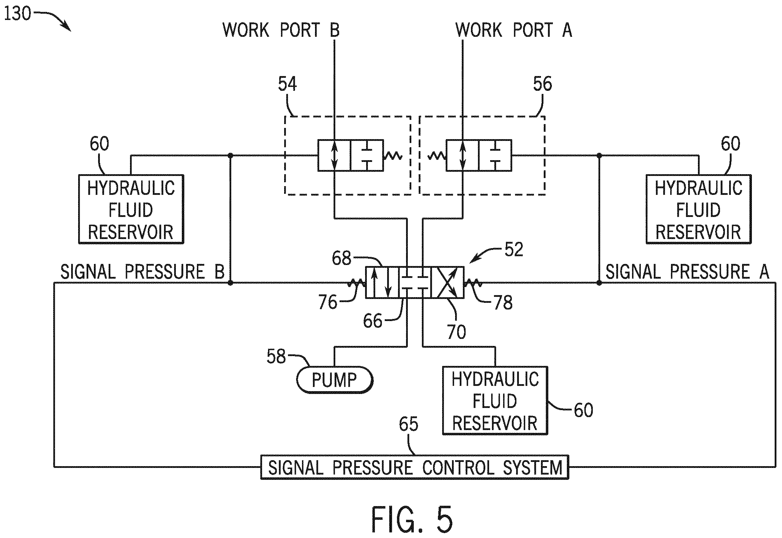

FIG. 5 is a schematic diagram of another embodiment of a hydraulic system 130 that may be used in the agricultural vehicle 10 of FIG. 1, and that uses automatic signal pressure to synchronize actuation of a directional control valve 52 and pilot-to-open check valves 54 and 56. As depicted, in this embodiment, the hydraulic system 130 is similar to the hydraulic system 50 of in FIG. 3, but this system 130 does not include vent-to-open check valves. Instead, signal pressure B is directly provided to the first pilot-to-open check valve 54, and signal pressure A is directly provided to the second vent-to-open check valve 56. Nevertheless, the process 110 of controlling the signal pressures to substantially synchronize the valve openings of FIG. 4 may still be applied, except the signal pressures are used to directly open the first and second pilot-to-open check valves 54 and 56. As may be appreciated, the first and second pilot-to-open check valves 54 and 56 are used as the main stage and not at the pilot stage (e.g., there is not a pilot stage in the depicted embodiment).

For example, when it is desired to provide hydraulic fluid to work port A and drain hydraulic fluid from work port B using the hydraulic system 130, the calibration pressures, i.e., for signal pressures that are sufficient to open each valve, or the positions of the valves, are determined (process block 112). Next, signal pressure A is increased so the actuating element 78 drives the directional control valve 52 to a position just barely short of opening (process block 114). For example, the calibration pressure differential for the directional control valve may be 3 bar. Thus, signal pressure A may be increased to 3 bar while signal pressure B is 0 bar.

Then, both signal pressures A and B are equally increased to causes the pilot-to-open check valves 54 and 56 to open, while still maintaining the same signal pressure differential, so that the directional control valve 52 does not move (e.g., signal pressure A increases to 7 bar, and signal pressure B increases to 4 bar, thereby maintaining the signal pressure differential at 3 bar, and providing the 4 bar signal pressure sufficient to shift the pilot-to-open check valves 54 and 56 to the open position) (process block 118). Then, process block 120 is executed substantially simultaneously with process block 118, i.e., by increasing signal pressure A (e.g., to 15 bar) while maintaining the lower signal pressure B (e.g., 4 bar) or increasing signal pressure B by a lesser amount than signal pressure A, to obtain a signal pressure differential of 11 bar that shifts the directional control valve 52 to the third position 70. In this way, the pilot-to-open check valves 54 and 56 and the directional control valve 52 are opened at substantially the same time (e.g., within 10-100 ms of one another).

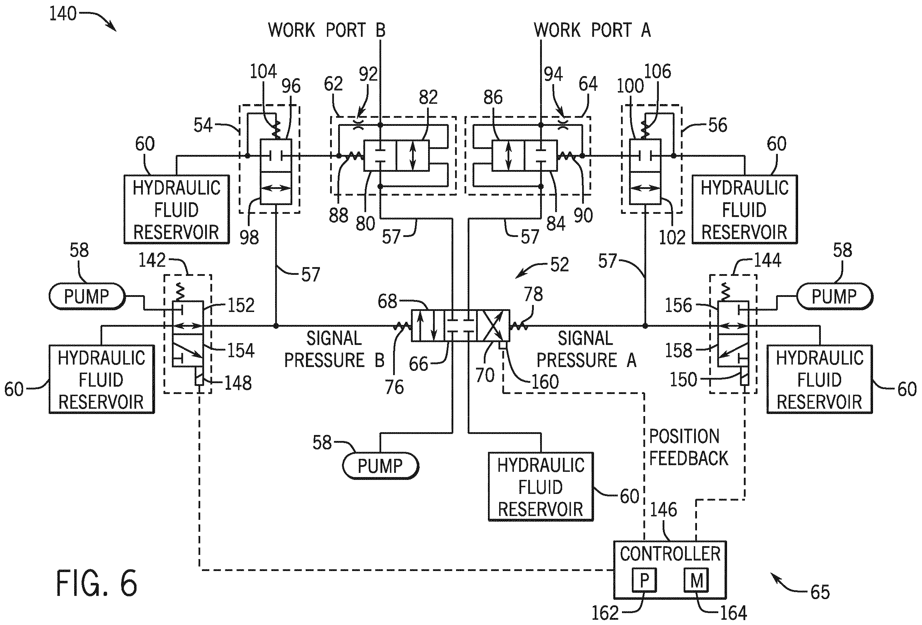

FIG. 6 is a schematic diagram of a further embodiment of a hydraulic system 140 that may be used in the agricultural vehicle of FIG. 1, and that uses flow control valves 142 and 144 with position feedback to synchronize actuation of the directional control valve 52 and pilot stage check valves 54 and 56. It should be understood that one purpose of this hydraulic system 140 is the same as the hydraulic system 50, which is to control the signal pressures to substantially synchronize the openings of the directional control valve 52 and the pilot stage check valves 54 and 56. Accordingly, the hydraulic system 140 includes many of the same components connected in the same way as the hydraulic system 50 of FIG. 3. For example, the hydraulic system 140 includes work ports A and B, the first and second pilot stage check valves 54 and 56, the first and second vent-to-open check valves 62 and 64, the directional control valve 52, and the signal pressure control system 65. In addition, the hydraulic system 140 includes a first flow control valve 142 and a second flow control valve 144. Also, in the depicted embodiment, the signal pressure control system 65 includes a controller 146. The first and second flow control valves 142 and 144 include a first solenoid 148 and a second solenoid 150, respectively, which are communicatively coupled to the controller 44.

The first flow control valve 142 includes two positions. A first position 152 is configured to block flow of hydraulic fluid from the pump 58 to the directional control valve 52 and to the first pilot stage check valve 54, while enabling flow of hydraulic fluid to the hydraulic fluid reservoir 60 from the actuating element 76 of the directional control valve 52 and the actuating element 104 of the first pilot stage check valve 54. Also, a second position 154 is configured to enable the pump 58 to provide hydraulic fluid via fluid conduit 57 to the actuating element 76 of the directional control valve 52 and the first pilot stage check valve 54. When the controller 146 activates the first solenoid 148, the first flow control valve 142 is driven to the second position 154. With the valve 142 in the second position 154, hydraulic fluid flows through the valve 142 and fluid conduit 57 to the actuating element 76 until a desired pressure (e.g., calibration pressure) is achieved.

Similarly, the second flow control valve 144 includes two positions. A first position 156 is configured to block flow of hydraulic fluid from the pump 58 to the actuating element 78 of the directional control valve 52 and to the second pilot stage check valve 56, while enabling the flow of hydraulic fluid to the hydraulic fluid reservoir 60 from the actuating element 78 directional control valve 52 and the actuating element 106 of the second pilot stage check valve 56. Also, a second position 158 is configured to enable the pump 58 to provide hydraulic fluid to the actuating element 78 of the directional control valve 52 and the second pilot stage check valve 56 via fluid conduit 57. When the controller 146 activates the first solenoid 148, the first flow control valve 142 is driven to the second position 154. With the valve 144 in the second position 158, hydraulic fluid flows through the valve 144 and fluid conduit 57 to the actuating element 78 until a desired pressure (e.g., calibration pressure) is achieved.

Further, to control the first and second flow control valves 142 and 144, the controller 146 uses position feedback obtained from a position measurement device (e.g., linear variable differential transformer (LVDT)) 160 coupled to the directional control valve 52 and communicatively coupled to the controller 146. In some embodiments, the position measurement device 160 is in direct or wireless communication with the controller 146. The position measurement device 160 provides positional information of the valve 52 to the controller 146. The controller 146 uses the positional information of the valve 52 to activate the appropriate solenoid 148 and 150 to drive the flow control valves 142 and 144 to a desired position. The determination of whether to open or close the flow control valves 142 and 144 is made solely by the controller 146. The opening and closing of the flow control valves 142 and 144 affects the signal pressures exerted on the actuating elements 76 and 78, thereby controlling the opening and closing of the directional control valve 52.

The controller 146 may include one or more processors 162 and one or more tangible, non-transitory processor-readable media (e.g., memory device 164). The processor 162 may include multiple microprocessors, one or more "general-purpose" microprocessors, one or more special-purpose microprocessors, and/or one or more application specific integrated circuits (ASICS), or some combination thereof. For example, the processor 162 may include one or more reduced instruction set (RISC) processors. The memory device 164 may include a volatile memory, such as random access memory (RAM), and/or a nonvolatile memory, such as ROM. The memory device 164 may store a variety of information and may be used for various purposes. For example, the memory device 164 may store processor-executable instructions (e.g., firmware or software) for the processor 162 to execute, such as instructions for controlling the flow control valves 142 and 144. In addition, the controller 146 may include a storage device(s) (e.g., nonvolatile storage), which may include read-only memory (ROM), flash memory, a hard drive, or any other suitable optical, magnetic, or solid-state storage medium, or a combination thereof. The storage device(s) may store data (e.g., calibration pressure data, position feedback data, etc.), instructions (e.g., software or firmware for controlling the hydraulic system 140, including flow control valves 142 and 144, etc.), and any other suitable data.

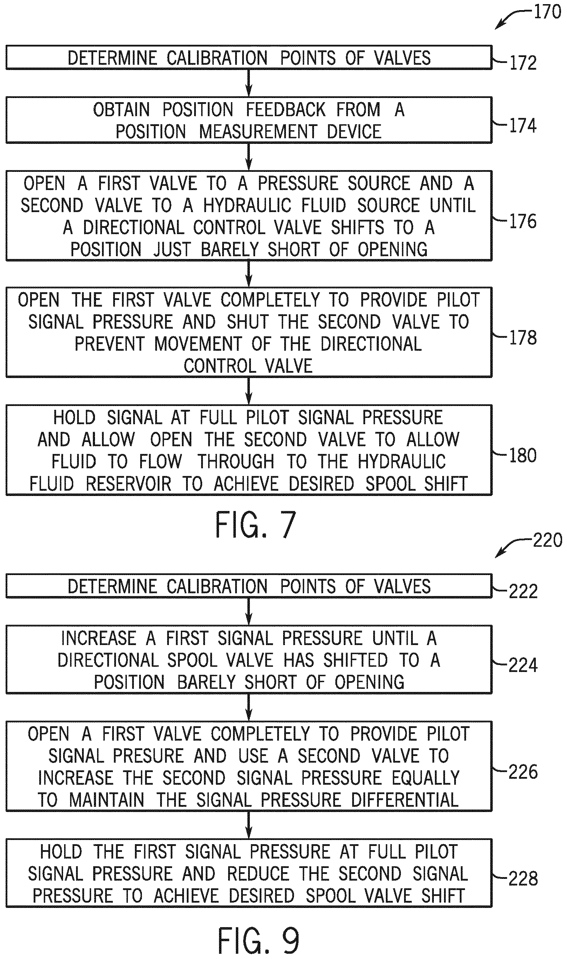

FIG. 7 is a flow diagram of an embodiment of a process 170 suitable for controlling the flow control valves 142 and 144 of FIG. 6 to synchronize actuation of the valves of the hydraulic system 140. The process 170 is used to control the pilot stage check valves 54 and 56, independently of the directional control valve 52, via signal pressures so that the pilot stage check valves are opened at substantially the same time as the directional control valve 52 (e.g., within 10-100 ms of the directional control valve 52). Portions of the process 170 may be implemented as computer instructions stored on the memory device 164 and executable by the processor 162. It should be noted that, in some embodiments, a single pressure may be used to control the first and second flow control valves 142 and 144.

The process 170 includes using the controller 146 to determine calibration points (e.g., pressures or position) for each of the valves (process block 172). In some embodiments, process block 172 includes obtaining the position of the directional control valve 52 via the position measurement device 160. Next, the process 170 includes using the controller 146 to obtain position feedback of the directional control valve 52 from the position measurement device 160 (process block 174). The controller 146 then controls the first flow control valve 142 to open to a pressure source (e.g., pump 58) and the second flow control valve 144 to the hydraulic fluid reservoir 60 until the directional control valve 52 shifts to a position just barely short of opening using (process block 176).

The process 170 also includes using the controller 146 to open the first flow control valve 142 to provide a pilot signal pressure to the directional control valve 52, and to close the second flow control valve 144 to block fluid from escaping to the hydraulic fluid reservoir 60, thereby increasing the second signal pressure equally to maintain the signal pressure differential and prevent the directional control valve 52 from moving (process block 178). Blocking fluid from escaping is achieved by moving the second flow control valve 144 to the second position 154 by activating solenoid 154. The higher signal pressures will cause the pilot stage check valves 54 and 56 to be driven to the second positions 98 and 102 (e.g., open). Then, the controller 146 continues to open the first flow control valve 142 fully at pilot signal pressure and controls the second flow control valve 144 to allow fluid to escape to the hydraulic fluid reservoir 60, which reduces the second signal pressure and increases the signal pressure differential, thereby achieving the desired directional control valve 52 shift (process block 180). To allow fluid to escape, the second flow control valve is shifted to the first position 152 by activating solenoid 152. It should be noted that, in some embodiments, the hydraulic system 140 is damped or over-damped so that a directional control valve 52 overshoot is inhibited. If overshoot does occur, a correction may be made by dropping the signal pressure below the threshold needed to keep the first and second pilot stage check valves 54 and 56 open. That is, the controller 146 may instruct the flow control valves 142 and 144 to move to the first positions 154 and 158 so fluid can flow from the pilot stage check valves 54 and 56 to the hydraulic fluid reservoir 60, thereby reducing signal pressure and enabling the valves 54 and 56 to close.

To illustrate, when it is desired to provide hydraulic fluid to work port A and drain hydraulic fluid from work port B, the controller 146 activates the solenoid 150 to drive the second flow control valve 144 to the second position 158, thereby opening the second flow control valve 144 to the pump 58, and maintains the first flow control valve 144 in the first position 152 to enable fluid to flow to the hydraulic fluid reservoir 60. The first and second fluid control valves 142 and 144 are kept in these positions until the directional control valve 52 shifts to a position barely short of the third position 70 based on position feedback obtained from the position measurement device 160.

The controller 146 obtains positional feedback from the position measurement device 160 relating to the directional control valve 52, so that the controller 146 ascertains when the valve 52 has reached a position just short of the third position 70 (process block 176). The second flow control valve 144 is then opened fully by completely transitioning the valve to the second position 158, such that signal pressure A increases to the full pilot pressure (e.g., 18 bar). At the same time/substantially the same time, the controller 146 instructs the first flow control valve 142 to close (e.g., transition to the second position 154) by activating solenoid 148, thereby increasing signal pressure B (e.g., to 15 bar) concurrently with signal pressure A (process block 178). In this way, the signal pressure differential between signal pressures A and B is maintained (e.g., 3 bar). The increased signal pressure A and signal pressure B cause the first and second pilot stage check valves 54 and 56 to move to the respective second positions 98 and 102. However, since the signal pressure differential is maintained, the directional control valve 52 substantially does not move. Then, the controller 146 executes process block 180 substantially simultaneously with process block 178 (e.g., within 10-100 ms of process block 178). Process block 180 includes the controller 146 maintaining the second flow control valve 144 in the fully open position (e.g., the second position 158), which maintains the signal pressure A (e.g., at 18 bar), and enabling fluid to flow to the hydraulic fluid reservoir 60 by instructing the solenoid 148 to move the flow control valve 142 toward the first position 152, thereby reducing signal pressure B (e.g., to 7 bar). As a result, the signal pressure differential increases to 11 bar, which causes the directional control valve 52 to shift to the third position 70. In this way, the pilot stage check valves 54 and 56 and the directional control valve 52 are opened at substantially the same time (e.g., within 10-100 ms of one another).

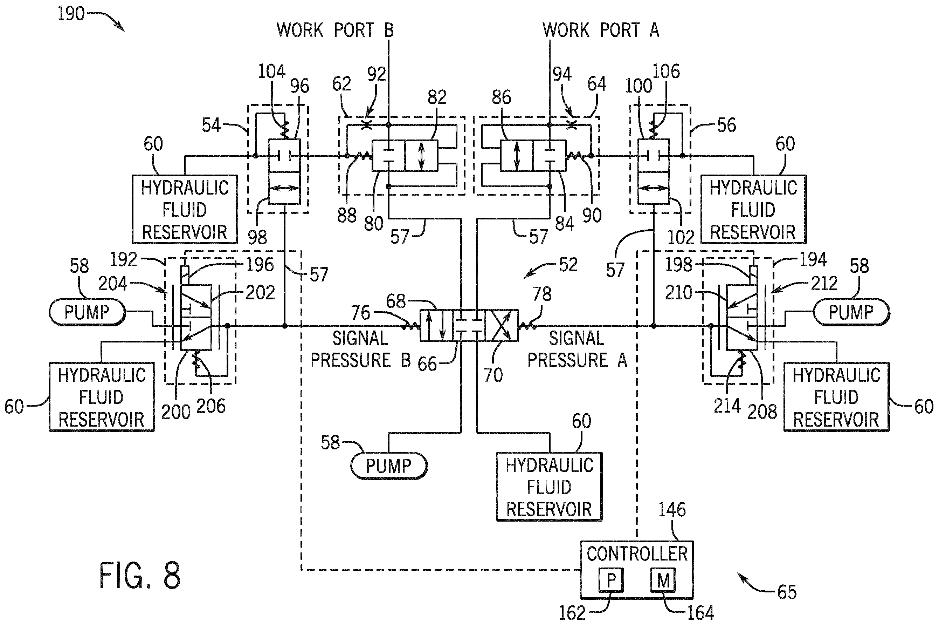

FIG. 8 is a schematic diagram of an embodiment of a hydraulic system 190 that may be used in the agricultural vehicle 10 of FIG. 1, and that uses pressure control valves 192 and 194 to synchronize actuation of the directional control valve 52 and the pilot stage check valves 54 and 56. The depicted hydraulic system 190 is similar to the hydraulic system 140 of FIG. 6. However, instead of the flow control valves 142 and 144 used in the system 140, the system 190 includes pressure control valves 192 and 194. One difference between the hydraulic system 190 and the hydraulic system 140 is that the pressure control valves 192 and 194 compare the pressure of fluid flow at the output of the valves against a solenoid force. As a result, the system 190 controls the signal pressure by only opening the pressure control valves 192 and 194 when the solenoid force outweighs the fluid pressure at the output of the valves. As depicted, solenoids 196 and 198 of the first and second pressure control valves 192 and 194, respectively, are communicatively coupled to the controller 146 of the signal pressure control system 65.

As depicted, the first pressure control valve 192 includes two positions. A first position 200 is configured to block flow of hydraulic fluid from the pump 58 to the directional control valve 52 and to the first pilot stage check valve 54, while enabling flow of hydraulic fluid to the hydraulic fluid reservoir 60 from the actuating element 76 of the directional control valve 52 and the actuating element 104 of the first pilot stage check valve 54. Also, a second position 202 is configured to enable the pump 58 to provide hydraulic fluid to the actuating element 76 of the directional control valve 52 and to the first pilot stage check valve 54 through the fluid conduit 57, while blocking hydraulic fluid flow to the hydraulic fluid reservoir 60 from the actuating element 76 of the directional control valve 52 and the first pilot stage check valve 54. When the controller 146 activates the first solenoid 196, the first pressure control valve 192 is driven to the second position 202 when the force applied by the solenoid outweighs the force applied by the fluid at the output (bar 204). In addition, an actuating element 206 (e.g., including a spring) urges the valve 192 to the first position 200. When the valve 192 is in the second position 202, hydraulic fluid flows through the valve 192 and fluid conduit 57 to the actuating element 76.

Similarly, the second pressure control valve 194 includes two positions. A first position 208 is configured to block flow of hydraulic fluid from the pump 58 to the directional control valve 52 and to the second pilot stage check valve 56, while enabling flow of hydraulic fluid to the hydraulic fluid reservoir 60 from the actuating element 76 of the directional control valve 52 and the actuating element 104 of the second pilot stage check valve 56. Also, a second position 210 is configured to enable the pump 58 to provide hydraulic fluid to the actuating element 76 of the directional control valve 52 and to the the second pilot stage check valve 56, while blocking hydraulic fluid flow to the hydraulic fluid reservoir 60 from the actuating element 76 of the directional control valve 52 and the second pilot stage check valve 56. When the controller 146 activates the second solenoid 198, the second pressure control valve 194 is driven to the second position 208 when the force applied by the solenoid outweighs the force applied by the fluid at the output (bar 212). In addition, an actuating element 214 (e.g., including a spring) urges the valve 194 to the first position 208. When the valve 194 is in the second position 210, hydraulic fluid flows through the valve 194 and fluid conduit 57 to the actuating element 78.

FIG. 9 is a flow diagram of an embodiment of a process 220 suitable for controlling to the pressure control valves 192 and 194 of FIG. 8 to synchronize actuation of the valves of the hydraulic system 190. It should be noted that, in some embodiments, a single pressure may be used to control the first and second pressure control valves 192 and 194. The process 220 used in hydraulic system 190 includes determining calibration points (e.g., pressures or positions) for each valve (process block 222). In some embodiments, the calibration pressures are determined based on signal pressures that cause the first and second pilot stage check valves 54 and 56 to move positions, and a signal pressure differential that causes the directional control valve 52 to move positions. Next, the process 220 includes using the controller 146 to instruct the solenoid 196 to apply a force sufficient to shift the first pressure control valve 192 to a position to increase a first signal pressure until the directional control valve 52 shifts to a position that is just barely short of opening (process block 224). More specifically, the first pressure control valve 192 may compare the force of fluid at the output (bar 204) to the force applied by the solenoid 192 and, when the force applied by the solenoid is greater than the output pressure, the first pressure control valve 192 partially shifts to increase the first signal pressure. In some embodiments, the calibration pressure differential for the directional control valve 52 is used to control signal pressures so the valve 52 is shifted to a position just barely short of opening.

The process 220 also includes using the controller 146 to send a signal to the solenoid 196 to fully open the first pressure control valve 192 to provide a pilot signal pressure to the directional control valve 52 (process block 226). It should be noted that, in some embodiments, the first pressure control valve 192 may compare the force applied by the solenoid 196 and the force of the fluid output when opening. Process block 226 also includes preventing hydraulic fluid from flowing to the hydraulic fluid reservoir 60 by activating the solenoid 198 of the second pressure control valve 194 so that the valve moves to the second position 210, which increases a second signal pressure equal to the first signal pressure to maintain the signal pressure differential.

Then, process block 228 is executed at substantially the same time as process block 228 (e.g., within 10-100 ms of process block 226). Process 230 includes the controller 146 opening the first pressure control valve 192 fully, thereby providing full pilot signal pressure. Step 228 also includes using the second pressure control valve to enable fluid to escape from the opposite spring chamber by activating the solenoid of the second pressure control valve 194 via the controller 146, which moves the valve to the first position 200 or 208, thereby reducing the second signal pressure to achieve the desired directional control valve 52 shift. By keeping the first signal pressure at the full pilot signal pressure and lowering the second signal pressure, a sufficient signal pressure differential is obtained to shift the directional control valve 52 to the open position (e.g., the second position or the third position). It should be noted that, in some embodiments, the hydraulic system 190 is damped or over-damped so that the possibility of directional control valve overshoot is substantially reduced or eliminated.

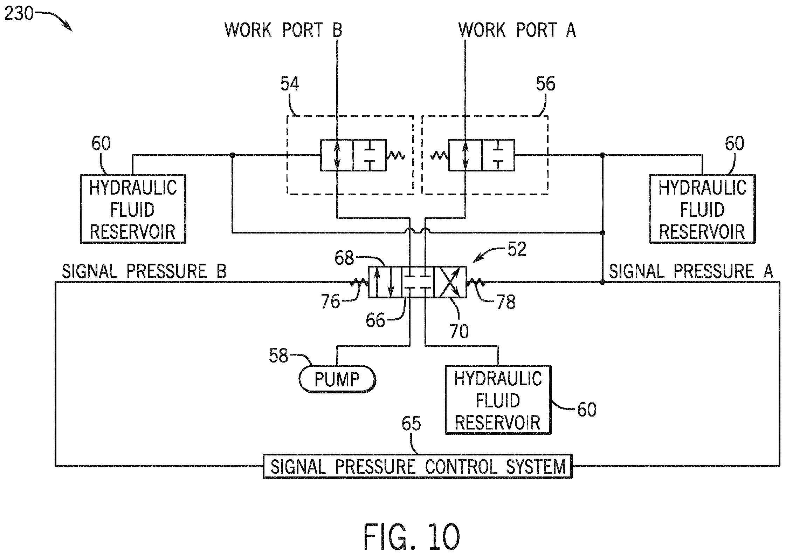

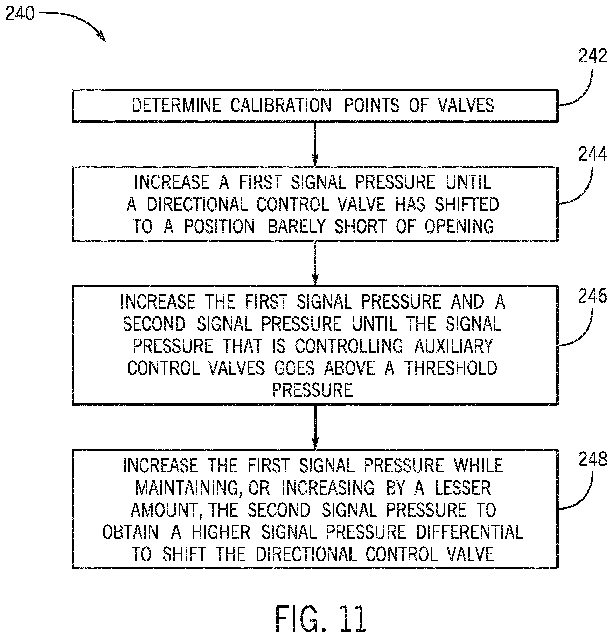

FIG. 10 is a schematic diagram of another embodiment of a hydraulic system 230 that may be used in the agricultural vehicle 10 of FIG. 1, and that uses automatic signal pressure to synchronize actuation of a directional control valve 52 and pilot-to-open check valves 54 and 56. FIG. 11 is a flow diagram of an embodiment of a process 240 suitable for controlling the valves of FIG. 10 to synchronize actuation of the valves of the hydraulic system. For clarity, FIGS. 10 and 11 will be discussed together.

As depicted, in this embodiment, the hydraulic system 230 is similar to the hydraulic system 130 of in FIG. 5, but this system 230 uses only a single pressure (e.g., signal pressure A) to control both of the pilot-to-open check valves 54 and 56. It should be noted that, in some embodiments, vent-to-open check valves may be used instead of the pilot-to-open check valves 54 and 56. The process 240 of controlling the signal pressures to substantially synchronize the valve openings of FIG. 5 may still be applied, except one signal pressure is used to directly open the first and second pilot-to-open check valves 54 and 56. As may be appreciated, the first and second pilot-to-open check valves 54 and 56 are used as the main stage and not at the pilot stage (e.g., there is not a pilot stage in the depicted embodiment).

The process 240 includes determining calibration points for each of the valves (process block 242). It should be noted that, in some embodiments, the calibration points may include a pressure or a position of the valve obtained from a position feedback device. The process 240 also includes the signal pressure control system 65 increasing a first signal pressure (e.g., signal pressure B) until the directional control valve 52 shifts to a position barely short of opening (process block 244). In some embodiments, the calibration pressure for the valve 52 may be used in process block 244. Then, the signal pressure control system 65 increases the first and a second signal pressure (e.g., signal pressure B and signal pressure A) until the signal pressure (e.g., signal pressure A) that is controlling the pilot-to-open check valves 54 and 56 goes above a threshold pressure (process block 246). As long as the signal pressure differential is the same, the directional control valve 52 does not move. The higher signal pressure (e.g., signal pressure A) will cause the pilot stage check valves 54 and 56 to open. While maintaining the same lower second signal pressure, or increasing the second signal pressure by a lesser amount, the signal pressure control system 65 increases the first signal pressure to obtain a higher signal pressure differential sufficient to shift positions of the directional control valve 52 (process block 248). It should be understood that process block 248 is performed substantially simultaneously with process block 246. It should be noted that performing the steps in process block 248 and 246 substantially simultaneously refers to performing the steps within 10 milliseconds (ms) to 100 ms.

While only certain features of the present disclosure have been illustrated and described herein, many modifications and changes will occur to those skilled in the art. It is, therefore, to be understood that the appended claims are intended to cover all such modifications and changes.

## Claims

1. A tangible, non-transitory computer-readable media storing computer instructions thereon, the computer instructions, when executed by a processor, configured to:
increase a first signal pressure to a first actuating element (76) of a directional control valve (52) until the directional control valve (52) is about to shift positions, wherein the first signal pressure is greater than a second signal pressure to a second actuating element (78) of the directional control valve (52) by a signal pressure differential; and
increase the first signal pressure and the second signal pressure equally while maintaining the signal pressure differential to cause a first pilot stage valve (54) via the first signal pressure, a second pilot stage valve (56) via the second signal pressure, to shift positions, and, within a threshold time thereafter increase the first signal pressure while maintaining or increasing by a lesser amount the second signal pressure to increase the signal pressure differential to a value sufficient to cause the directional control valve (52) to shift positions.

2. The computer-readable media of claim 1, wherein the computer instructions are configured to:
determine calibration pressures or position obtained via a feedback device for the directional control valve (52), the first pilot stage valve (54), the second pilot stage valve (56), wherein each calibration pressure corresponds to a signal pressure or signal pressure differential sufficient to cause the respective valve to shift positions.

3. The computer-readable media of claim 2, wherein the computer instructions are configured to determine the calibration pressures by determining a threshold signal pressure differential between the first and second signal pressures that causes the directional control valve (52) to shift positions, and to determine a threshold signal pressure that causes the first and second pilot stage valves (54, 56) to shift positions.

4. The computer-readable media of claim 2, wherein the computer instructions are configured to increase the first signal pressure until the directional control valve (52) is about to shift positions, to increase the first and second signal pressures such that the directional control valve (52) remains barely short of shifting positions, and to increase the first signal pressure while maintaining the same second signal pressure.

5. The computer-readable media of claim 1, wherein the threshold time comprises a range of 10 milliseconds to 100 milliseconds.

6. The computer-readable media of claim 1, wherein increasing the first and second signal pressures equally while maintaining the signal pressure differential prevents the directional control valve (52) from shifting positions.

7. The computer-readable media of claim 1, wherein:
the directional control valve (52) is configured to selectively transition between a first position, a second position, and a third position, wherein the first position blocks fluid flow from a first vent-to-open check valve (62) and from a second vent-to-open check valve (64) to a hydraulic fluid reservoir (60) and that blocks fluid flow from a pump (58) to the first and second vent-to-open check valves (62, 64), the second position provides fluid from the pump (58) to the first vent-to-open check valve (62) and facilitates fluid flow from the second vent-to-open check valve (64) to the hydraulic fluid reservoir (60), and the third position provides fluid from the pump (58) to the second vent-to-open check valve (64) and facilitates fluid flow from the first vent-to-open check valve (62) to the hydraulic fluid reservoir (60);
the first pilot stage valve (54) is configured to selectively transition between a first position and a second position, wherein the first position blocks fluid flow from a vent of the first vent-to-open check valve (62) to the hydraulic fluid reservoir (60), and the second position facilitates fluid flow from the vent of the first vent-to-open check valve (62) to the hydraulic fluid reservoir (60);
the second pilot stage valve (56) is configured to selectively transition between a first position and a second position, wherein the first position blocks fluid flow from a vent of the second vent-to-open check valve (64) to the hydraulic fluid reservoir (60), and the second position facilitates fluid flow from the vent of the second vent-to-open check valve (64) to the hydraulic fluid reservoir (60) or from the second work port to the hydraulic fluid reservoir (60);
the first vent-to-open check valve (62) is configured to selectively transition between a first position and a second position, wherein the first position blocks fluid flow to the directional control valve (52) from the first work port, and the second position facilitates fluid flow from the first work port to the directional control valve (52) or from the directional control valve (52) to the first work port and the first pilot stage valve (54); and
the second vent-to-open check valve (64) is configured to selectively transition between a first and second position, wherein the first position blocks fluid flow from the second work port to the directional control valve (52), and the second position facilitates fluid flow from the second work port to the directional control valve (52) or from the directional control valve (52) to the second work port and the second pilot stage valve (56).

8. The computer-readable media of claim 1, wherein the computer instructions are configured to control the first and second signal pressures to cause actuating elements of the directional control valve (52) to transition the directional control valve (52) to a first position that blocks fluid flow from the first pilot stage valve (54) and from the second pilot stage valve (56) to a hydraulic fluid reservoir (60), to a second position that facilitates fluid flow from the second vent-to-open check valve (64) to the hydraulic fluid reservoir (60), and a third position that facilitates fluid flow from the first vent-to-open check valve (62) to the hydraulic fluid reservoir (60), and the first and second signal pressures are used to open the first and second pilot stage valves (54, 56), respectively.

9. The computer-readable media of claim 1, wherein causing the first and second pilot stage valves (54, 56) to shift positions comprises:
moving the first pilot stage check valve (54) from a first position to a second position, wherein the first position is configured to block fluid flow from a first work port to a hydraulic fluid reservoir (60), and the second position is configured to facilitate fluid flow from and a vent of a first vent-to-open check valve (62) to the hydraulic fluid reservoir (60); and
moving the second pilot stage valve (56) from a first position to a second position, wherein the first position is configured to block fluid flow from a second work port to the hydraulic fluid reservoir (60), and the second position is configured to facilitate fluid flow from a vent of a second vent-to-open check valve (64) to the hydraulic fluid reservoir (60).

10. The computer-readable media of claim 1, wherein causing the first and second pilot stage valves (54, 56) to open causes a first and second vent-to-open valve to open (62 64), respectively.

## Patentansprüche

1. Greifbares, nicht vergängliches computerlesbares Medium, das darauf Computerbefehle speichert, wobei die Computerbefehle, wenn sie von einer Verarbeitungseinrichtung ausgeführt werden, dazu eingerichtet sind, um:
einen ersten Signaldruck zu einem ersten Betätigungselement (76) eines Wegeventils (52) zu erhöhen, bis das Wegeventil (52) kurz davor ist, Stellungen zu verschieben bzw. zu schalten, wobei der erste Signaldruck um eine Signaldruckdifferenz größer ist als ein zweiter Signaldruck auf ein zweites Betätigungselement (78) des Wegeventils (52); und
den ersten Signaldruck und den zweiten Signaldruck in gleicher Weise zu erhöhen, während die Signaldruckdifferenz gleich gehalten wird, um zu bewirken, dass ein erstes Pilotstufenventil (54) über den ersten Signaldruck, ein zweites Pilotstufenventil (56) über den zweiten Signaldruck seine Stellungen schaltet, und innerhalb eines Zeitschwellwertes danach den ersten Signaldruck zu erhöhen, wobei der zweite Signaldruck aufrecht erhalten wird oder um eine geringere Menge erhöht wird, um die Signaldruckdifferenz auf einen Wert zu erhöhen, der ausreichend ist, um eine Stellungsänderung bzw. Schaltung des Wegeventils (52) zu bewirken.

2. Computerlesbares Medium nach Anspruch 1, wobei die Computerbefehle dazu eingerichtet sind, um:
Kalibrierungsdrücke oder eine -stellung zu bestimmen, die durch eine Rückkopplungseinrichtung für das Wegeventil (52), das erste Pilotstufenventil (54), das zweite Pilotstufenventil (56) erhalten wurden, wobei jeder Kalibrierungsdruck einem Signaldruck oder einer Signaldruckdifferenz entspricht, der bzw. die ausreichend ist, um ein Verschieben bzw. Umschalten von Stellungen in dem entsprechenden Ventil zu bewirken.

3. Computerlesbares Medium nach Anspruch 2, wobei die Computerbefehle dazu eingerichtet sind, um die Kalibrierungsdrücke zu bestimmen, indem ein Signaldruckdifferenzgrenzwert zwischen den ersten und zweiten Signaldrücken bestimmt wird, der bewirkt, dass das Wegeventil (52) die Stellungen umschaltet, und um einen Signaldruckgrenzwert zu bestimmen, der bewirkt, dass die ersten und zweiten Pilotstufenventile (54, 56) die Stellungen umschalten.

4. Computerlesbares Medium nach Anspruch 2, wobei die Computerbefehle dazu eingerichtet sind, den ersten Signaldruck zu erhöhen, bis das Wegeventil (52) kurz davor ist, die Stellungen umzuschalten, die ersten und zweiten Signaldrücke derart zu erhöhen, sodass das Wegeventil (52) gerade noch vor dem Umschalten der Stellungen verbleibt, und um den ersten Signaldruck zu erhöhen, während derselbe zweite Signaldruck beibehalten wird.

5. Computerlesbares Medium nach Anspruch 1, wobei der Zeitschwellwert einen Bereich von 10 Millisekunden bis 100 Millisekunden umfasst.

6. Computerlesbares Medium nach Anspruch 1, wobei das gleichzeitige Erhöhen der ersten und zweiten Signaldrücke, während die Signaldruckdifferenz beibehalten wird, verhindert, dass das Wegeventil (52) seine Stellungen umschaltet.

7. Computerlesbares Medium nach Anspruch 1, wobei:
das Wegeventil (52) dazu eingerichtet ist, wahlweise zwischen einer ersten Stellung, einer zweiten Stellung und einer dritten Stellung zu schalten, wobei die erste Stellung den Fluidfluss vor einem ersten vent-to-open Sperrventil (62) und von einem zweiten vent-to-open Sperrventil (64) zu einem Hydraulikflüssigkeitsreservoir (60) blockiert, und die einen Fluidfluss von einer Pumpe (58) zu den ersten und zweiten vent-to-open Sperrventilen (62, 64) blockiert, wobei die zweite Stellung dem ersten vent-to-open Sperrventil (62) Flüssigkeit von der Pumpe (58) bereitstellt und den Fluidfluss von dem zweiten vent-to-open Sperrventil (64) zu dem Hydraulikflüssigkeitsreservoir (60) ermöglicht, und wobei die dritte Stellung dem zweiten vent-to-open Sperrventil (64) Fluid von der Pumpe (58) bereitstellt und einen Fluidfluss von dem ersten vent-to-open Sperrventil (62) zu dem Hydraulikflüssigkeitsreservoir (60) ermöglicht;
das erste Pilotstufenventil (54) dazu eingerichtet ist, wahlweise zwischen einer ersten Stellung und einer zweiten Stellung zu schalten, wobei die erste Stellung einen Fluidfluss von einer Öffnung des ersten vent-to-open Sperrventils (62) zu dem Hydraulikflüssigkeitsreservoir (60) blockiert, und wobei die zweite Stellung einen Fluidfluss von der Öffnung des ersten vent-to-open Sperrventils (62) zu dem Hydraulikflüssigkeitsreservoir (60) ermöglicht;
das zweite Pilotstufenventil (56) dazu eingerichtet ist, wahlweise zwischen einer ersten Stellung und einer zweiten Stellung zu schalten, wobei die erste Stellung einen Fluidfluss von einer Öffnung des zweiten vent-to-open Sperrventils (64) zu dem Hydraulikflüssigkeitsreservoir (60) blockiert, und wobei die zweite Stellung einen Fluidfluss von der Öffnung des zweiten vent-to-open Sperrventils (64) zu dem Hydraulikflüssigkeitsreservoir (60) oder von dem zweiten Arbeitsanschluss zu dem Hydraulikflüssigkeitsreservoir (60) ermöglicht;
das erste vent-to-open Sperrventil (62) dazu eingerichtet ist, wahlweise zwischen einer ersten Stellung und einer zweiten Stellung zu schalten, wobei die erste Stellung einen Fluidfluss zu dem Wegeventil (52) von dem ersten Arbeitsanschluss blockiert, und wobei die zweite Stellung einen Fluidfluss von dem ersten Arbeitsanschluss zu dem Wegeventil (52) oder von dem Wegeventil (52) zu dem ersten Arbeitsanschluss und dem ersten Pilotsteuerventil (54) ermöglicht; und
das zweite vent-to-open Sperrventil (64) dazu eingerichtet ist, wahlweise zwischen einer ersten und einer zweiten Stellung zu schalten, wobei die erste Stellung einen Fluidfluss von dem zweiten Arbeitsanschluss zu dem Wegeventil (52) blockiert, und wobei die zweite Stellung einen Fluidfluss von dem zweiten Arbeitsanschluss zu dem Wegeventil (52) oder von dem Wegeventil (52) zu dem zweiten Arbeitsanschluss und dem zweiten Pilotstufenventil (56) ermöglicht.

8. Computerlesbares Medium nach Anspruch 1, wobei die Computerbefehle dazu eingerichtet sind, die ersten und zweiten Signaldrücke zu steuern, um zu bewirken, dass die Betätigungselemente des Wegeventils (52) das Wegeventil (52) in eine erste Stellung, die einen Fluidfluss von dem ersten Pilotstufenventil (54) und von dem zweiten Pilotstufenventil (56) zu einem Hydraulikflüssigkeitsreservoir (60) blockiert, in eine zweite Stellung, die einen Fluidfluss von dem zweiten vent-to-open Sperrventil (64) zu dem Hydraulikflüssigkeitsreservoir (60) ermöglicht, und in eine dritte Stellung schalten, die einen Fluidfluss von dem ersten vent-to-open Sperrventil (62) zu dem Hydraulikflüssigkeitsreservoir (60) ermöglicht, und wobei die ersten und zweiten Signaldrücke verwendet werden, um die ersten bzw. zweiten Pilotstufenventile (54, 56) zu öffnen.

9. Computerlesbares Medium nach Anspruch 1, wobei das Bewirken, dass die ersten und zweiten Pilotstufenventile (54, 56) Stellungen schalten, folgendes aufweist:
Bewegen des ersten Pilotstufensperrventils (54) von einer ersten Stellung in eine zweite Stellung, wobei die erste Stellung dazu eingerichtet ist, den Fluidfluss von einem ersten Arbeitsanschluss zu einem Hydraulikflüssigkeitsreservoir (60) zu blockieren, und wobei die zweite Stellung dazu eingerichtet ist, einen Fluidfluss von einer Öffnung eines ersten vent-to-open Sperrventils (62) zu dem Hydraulikflüssigkeitsreservoir (60) zu ermöglichen; und
Bewegen des zweiten Pilotstufenventils (56) von einer ersten Stellung in eine zweite Stellung, wobei die erste Stellung dazu eingerichtet ist, den Fluidfluss von einem zweiten Arbeitsanschluss zu dem Hydraulikflüssigkeitsreservoir (60) zu blockieren, und wobei die zweite Stellung dazu eingerichtet ist, den Fluidfluss von einer Öffnung eines zweiten vent-to-open Sperrventils (64) zu dem Hydraulikflüssigkeitsreservoir (60) zu ermöglichen.

10. Computerlesbares Medium nach Anspruch 1, wobei durch die Öffnung der ersten und zweiten Pilotstufenventile (54, 56) einen Öffnung der ersten bzw. zweiten vent-to-open Sperrventile (62, 64) bewirkt wird.

## Revendications

1. Support matériel, non transitoire, lisible par ordinateur stockant des instructions d'ordinateur sur celui-ci, les instructions d'ordinateur, lorsqu'elles sont exécutées par un processeur, étant conçues pour :
augmenter une première pression de signal vers un premier élément d'actionnement (76) d'une soupape de commande directionnelle (52) jusqu'à ce que la soupape de commande directionnelle (52) soit sur le point de changer de positions, la première pression de signal étant supérieure à une seconde pression de signal vers un second élément d'actionnement (78) de la soupape de commande directionnelle (52) d'une différence de pression de signal, et
augmenter la première pression de signal et la seconde pression de signal de manière égale en maintenant la différence de pression de signal pour provoquer un changement de positions d'une première soupape d'étage pilote (54) via la première pression de signal, et d'une seconde soupape d'étage pilote (56) via la seconde pression de signal, et après un laps de temps seuil, augmenter la première pression de signal en maintenant ou en augmentant la seconde pression de signal d'une quantité inférieure afin d'augmenter la différence de pression de signal jusqu'à une valeur suffisante pour provoquer un changement de positions par la soupape de commande directionnelle (52).

2. Support matériel lisible par ordinateur selon la revendication 1, dans lequel les instructions d'ordinateur sont conçues pour :
déterminer des pressions ou une position d'étalonnage obtenues par un dispositif de rétroaction pour la première soupape de commande directionnelle (52), la première soupape d'étage pilote (54) et la seconde soupape d'étage pilote (56), chaque pression d'étalonnage correspondant à une pression de signal ou à une différence de pression de signal suffisante pour provoquer un changement de positions par la soupape respective.

3. Support matériel lisible par ordinateur selon la revendication 2, dans lequel les instructions d'ordinateur sont conçues pour déterminer les pressions d'étalonnage en déterminant une différence de pression de signal seuil entre les première et seconde pressions de signal qui entraîne un changement de positions par la soupape de commande directionnelle (52), et pour déterminer une pression de signal seuil qui entraîne un changement de positions par les première et seconde soupapes d'étage pilote (54, 56).

4. Support matériel lisible par ordinateur selon la revendication 2, dans lequel les instructions d'ordinateur sont conçues pour augmenter la première pression de signal jusqu'à ce que la soupape de commande directionnelle (52) soit sur le point de changer de positions, pour augmenter les première et seconde pressions de signal de telle sorte que la soupape de commande directionnelle (52) demeure à peine inférieure à une situation de changement de position, et pour augmenter la première pression de signal tout en maintenant une même seconde pression de signal.

5. Support lisible par ordinateur selon la revendication 1, dans lequel le laps de temps seuil comprend une plage de 10 millisecondes à 100 millisecondes.

6. Support matériel lisible par ordinateur selon la revendication 1, dans lequel l'**augmentation** *de* la première pression de signal et la seconde pression de signal de manière égale en maintenant la différence de pression de signal pour provoquer un changement empêche la soupape de commande directionnelle (52) de changer de positions.

7. Support matériel lisible par ordinateur selon la revendication 1, dans lequel :
la soupape de commande directionnelle (52) est conçue pour passer sélectivement entre une première position, une seconde position, et une troisième position, dans lesquelles la première position bloque l'écoulement de fluide depuis un premier clapet de non-retour à évent ouvrable (62) et depuis un second clapet de non-retour à évent ouvrable (64) jusqu'à un réservoir de fluide hydraulique (60) et qui bloque l'écoulement de fluide depuis une pompe (58) jusqu'aux premier et second clapets de non-retour à évent ouvrable (62, 64), la seconde position permet de fournir du fluide depuis la pompe (58) jusqu'au premier clapet de non-retour à évent ouvrable (62) et permet l'écoulement de fluide depuis le second clapet de non-retour à évent ouvrable (64) jusqu'au réservoir de fluide hydraulique (60), et la troisième position permet de fournir du fluide depuis la pompe (58) jusqu'au second clapet de non-retour à évent ouvrable (64) et permet l'écoulement de fluide depuis le premier clapet de non-retour à évent ouvrable (62) jusqu'au réservoir de fluide hydraulique (60),
la première soupape d'étage pilote (54) est conçue pour passer sélectivement entre une première position et une seconde position, la première position bloquant l'écoulement de fluide d'un évent du premier clapet de non-retour à évent ouvrable (62) jusqu'au réservoir de fluide hydraulique (60), et la seconde position permettant l'écoulement de fluide de l'évent du premier clapet de non-retour à évent ouvrable (62) jusqu'au réservoir de fluide hydraulique (60);
la seconde soupape d'étage pilote (56) est conçue pour passer sélectivement entre une première position et une seconde position, la première position bloquant l'écoulement de fluide d'un évent du second clapet de non-retour à évent ouvrable (64) jusqu'au réservoir de fluide hydraulique (60), et la seconde position permettant l'écoulement de fluide de l'évent du second clapet de non-retour à évent ouvrable (64) jusqu'au réservoir de fluide hydraulique (60) ou depuis le second orifice de travail jusqu'au réservoir de fluide hydraulique (60),
le premier clapet de non-retour (62) est conçu pour passer sélectivement entre une première position et une seconde position, dans lesquelles la première position bloque l'écoulement du fluide vers la soupape de commande directionnelle (52) depuis le premier orifice de travail, et la seconde position permet l'écoulement de fluide depuis le premier orifice de travail jusqu'à la soupape de commande directionnelle (52) ou depuis la soupape de commande directionnelle (52) jusqu'au premier orifice de travail et jusqu'à la première soupape d'étage pilote (54), et
le second clapet de non-retour (64) est conçu pour passer sélectivement entre une première position et une seconde position, dans lesquelles la première position bloque l'écoulement du fluide vers la soupape de commande directionnelle (52) depuis la seconde orifice de travail, et la seconde position permet l'écoulement de fluide depuis le second orifice de travail jusqu'à la soupape de commande directionnelle (52) ou depuis la soupape de commande directionnelle (52) jusqu'au second orifice de travail et jusqu'à la seconde soupape d'étage pilote (56)

8. Support matériel lisible par ordinateur selon la revendication 1, dans lequel les instructions d'ordinateur sont conçues pour commander les première et seconde pressions de signal pour engendrer, par des éléments d'actionnement de la soupape de commande directionnelle (52), un changement de position de la soupape de commande directionnelle (52) vers une première position qui bloque l'écoulement de fluide depuis la première soupape d'étage pilote (54) et depuis la seconde soupape d'étage pilote (56) vers un réservoir de fluide hydraulique (60), vers une seconde position qui permet un écoulement de fluide depuis le second clapet de non-retour à évent ouvrable (64) jusqu'au réservoir de fluide hydraulique (60), et une troisième position qui permet un écoulement de fluide depuis le premier clapet de non-retour à évent ouvrable (62) jusqu'au réservoir de fluide hydraulique (60), et les première et seconde pressions de signal sont utilisées pour ouvrir respectivement les première et seconde soupapes d'étage pilotes (54, 56).

9. Support matériel lisible par ordinateur selon la revendication 1, dans lequel le changement de positions occasionné par les première et seconde soupapes d'étage pilotes (54, 56) comprend :
le déplacement du premier clapet de non-retour d'étage pilote (54) d'une première position à une seconde position, la première position étant configurée pour bloquer un écoulement de fluide depuis un premier orifice de travail vers un réservoir de fluide hydraulique (60), et la seconde position permettant un écoulement de fluide depuis un évent d'un premier clapet de non-retour à évent ouvrable (62) jusqu'au réservoir de fluide hydraulique (60), et
le déplacement du second clapet de non-retour d'étage pilote (56) d'une première position à une seconde position, la première position étant configurée pour bloquer un écoulement de fluide depuis un premier orifice de travail vers un réservoir de fluide hydraulique (60), et la seconde position étant configurée pour permettre un écoulement de fluide depuis un évent d'un premier clapet de non-retour à évent ouvrable (62) jusqu'au réservoir de fluide hydraulique (60), et

10. Support matériel lisible par ordinateur selon la revendication 1, dans lequel le changement de positions occasionné par les première et seconde soupapes d'étage pilotes (54, 56) comprend : engendrent une ouverture respective des premier et second clapets à évent ouvrable (62 64).
